# EUROPÄISCHE PATENTSCHRIFT

(11) **EP 4 390 760 B1**
(45) Veröffentlichungstag und Bekanntmachung des Hinweises auf die Patenterteilung: **22.10.2025**
(21) Anmeldenummer: 23216806.2
(22) Anmeldetag: 14.12.2023
(51) Int. Cl.: G06K 19/07, G06K 19/077, B32B 15/00, B32B 27/08, B32B 7/12, B32B 27/32, B32B 27/36, B32B 3/08

(54) **VERPACKUNGSFOLIE**
WRAPPING FILM
FILM D'EMBALLAGE

(30) Priorität: 21.12.2022 AT 509852022
(43) Veröffentlichungstag der Anmeldung: 26.06.2024
(73) Patentinhaber: Adapa Digital GesmbH, 2351 Wr. Neudorf (AT)
(72) Erfinder: BIEL, Stefan, 21077 Hamburg (DE); KEPLINGER, Jürgen, 4351 Saxen (AT)
(74) Vertreter: Gibler & Poth Patentanwälte KG

(56) Entgegenhaltungen:
- EP-A1- 2 026 253
- US-A1- 2010 177 991

## Beschreibung

Die Erfindung betrifft eine Verpackungsfolie gemäß dem Oberbegriff des Patentanspruches 1.

Es ist bekannt Verpackungsfolien zum Verpacken von Packgütern, wie beispielsweise von Lebensmitteln und Medikamenten, zu verwenden. Dabei kann der fertig verpackte Gegenstand, das Packstück, vor äußeren Einflüssen, welche beispielsweise bei einem Transport und einer Lagerung des Packstücks auftreten, geschützt werden. Dabei sind zum Verpacken von Packgütern unter anderem Verbundfolien umfassend Aluminium und Kunststoff bekannt.

Weiters ist bekannt im Transport und in der Logistik sowie im Handel automatische Identifikation- und Datenerfassungssysteme einzusetzen, welche Identifikatoren für die Erkennung von Objekten verwenden. Dabei werden unter anderem Transponder, wie RFID-Chips, eingesetzt, nachdem diese besonders einfach drahtlos ausgelesen werden können. Für die Identifikation eines Objekts wird für gewöhnlich mittels eines Lesegeräts ein an der Verpackung befestigter Identifikator über Funk ausgelesen und die ausgelesenen Daten mittels eines Computers weiterverarbeitet.

Nachteilig an den derzeit bekannten Systemen ist, dass speziell bei metallisierten Folien und der Verwendung von Transpondern als Identifikatoren für die automatische Identifikation- und Datenerfassung das Auslesen der Transponder durch die metallisierte Schicht der Verpackungsfolie gestört wird, sodass ein Auslesen des Transponders erschwert und unter Umständen verunmöglicht wird.

Aus der EP 2 026 253 A1 ist eine Warenverpackung umfassend eine Deckfolie mit mindestens einer Metallschicht, mindestens einen RFID-Chip, mindestens eine RFID-Antenne sowie eine erste Aussparung und eine zweite Aussparung bekannt. Der RFID-Antenne ist der erste Aussparung in der Deckschicht zugeordnet, wodurch ein Auslesen des RFID-Chips erleichtert wird.

Aus der US 2010/177991 A1 ist ein Verpackungsmaterial bekannt, bei welchem auf einem Oberflächenmaterial aus Kunststoff eine Metallschicht angeordnet ist. In der Metallschicht ist ein Spalt ausgebildet, welcher als Antenne für einen RFID-Chip wirkt.

Aufgabe der Erfindung ist es daher eine Verpackungsfolie der eingangs genannten Art anzugeben, mit welcher die genannten Nachteile vermieden werden können, mit welcher ein an einer Verpackungsfolie angeordneter Transponder besser ausgelesen werden kann.

Erfindungsgemäß wird dies durch die Merkmale des Patentanspruches 1 erreicht.

Dadurch ergibt sich der Vorteil, dass lokal im Bereich des wenigstens einen Transponders die Abschirmung der wenigstens einen Metallschicht geschwächt werden kann, wodurch der wenigstens eine Transponder mit geringeren Störungen als bei derzeit bekannten Verpackungsfolien ausgelesen werden kann. Dadurch wird ein zum Auslesen von einem Auslesegerät eingestrahltes elektromagnetisches Feld nicht derart an einer Metallschicht reflektiert oder absorbiert, dass ein Auslesen des wenigstens einen Transponders verunmöglicht wird. Dabei kann die Verpackungsfolie schnell und einfach hergestellt sowie der Barrierebereich der Grundfolie in einem Beschichtungsprozess schnell und einfach mit der wenigstens einen Metallschicht beschichtet werden, wodurch eine Verpackungsfolie geschaffen werden kann, welche mit geringeren Störungen als derzeit bekannte Metall umfassende Verpackungsfolien ausgelesenen werden kann und dabei dennoch mit bereits bekannten Verpackungsfolien am Markt bezüglich Herstellungskosten konkurrieren kann. Dadurch kann eine Verpackung aus der Verpackungsfolie geschaffen werden, welche die beispielsweise für Lebensmittel- und Medikamentenverpackungen strengen Vorgaben erfüllt und dabei die Vorteile von Transpondern für die automatische Identifikation- und Datenerfassung ermöglicht.

Die Erfindung betrifft weiters ein Verfahren zur Herstellung einer Verpackungsfolie gemäß dem Patentanspruch 14.

Die Erfindung hat daher weiters die Aufgabe ein Verfahren der eingangs genannten Art anzugeben, mit welchem die genannten Nachteile vermieden werden können, mit welchem ein an der Verpackungsfolie angeordneter Transponder möglichst störungsfrei ausgelesen werden kann.

Erfindungsgemäß wird dies durch die Merkmale des Patentanspruches 14 erreicht.

Die Vorteile des Verfahrens entsprechen den Vorteilen der oben genannten Verpackungsfolie.

Die Unteransprüche betreffen weitere vorteilhafte Ausgestaltungen der Erfindung.

Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine Skizze einer bevorzugten Ausführungsform einer Verpackungsfolie Großteils aufgerollt auf einer Verpackungsrolle in axonometrischer Darstellung,
Fig. 2 ein in Fig. 1 gezeigtes Detail,
Fig. 3 den in Fig. 2 gezeigten Schnitt nach AA,
Fig. 4 eine Skizze eines Abschnitts einer weiteren bevorzugten Ausführungsform der Verpackungsfolie in axonometrischer Darstellung,
Fig. 5 eine Skizze einer bevorzugten Ausführungsform einer aus zumindest einem Abschnitt der in Fig. 2 gezeigten Verpackungsfolie ausgebildeten Verpackung in Draufsicht,
Fig. 6 den in Fig. 5 gezeigten Schnitt nach BB.

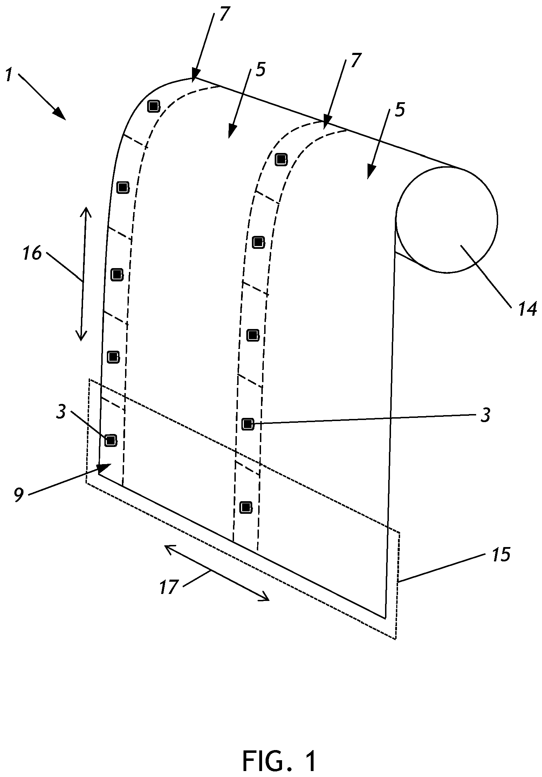

Die Fig. 1 bis 6 zeigen zumindest Teile einer bevorzugte Ausführungsform einer Verpackungsfolie 1 umfassend eine Grundfolie 2 und wenigstens einen Transponder 3, wobei die Grundfolie 2 eine Trägerschicht 4 aufweist, wobei die Grundfolie 2 in einem Barrierebereich 5 weiters wenigstens eine zumindest mittelbar auf der Trägerschicht 4 angeordnete Metallschicht 6 umfasst, wobei die Grundfolie 2 weiters einen Transponderbereich 7 umfasst, wobei in dem Transponderbereich 7 der wenigstens eine Transponder 3 an der Grundfolie 2 angeordnet ist, wobei die Grundfolie 2 in dem Transponderbereich 7 einen geringeren Schirmdämpfungswert als in dem Barrierebereich 5 aufweist.

Weiters ist eine Verpackung 11 aus zumindest einem Abschnitt der Verpackungsfolie 1 vorgesehen, wobei die Verpackung 11 mittels der Verpackungsfolie 1 eine Hülle für ein Packgut 12 ausbildet, wobei der Transponderbereich 7 der Grundfolie 2 von der ausgebildeten Hülle für das Packgut 12 abstehend angeordnet ist.

Weiters ist ein Verfahren zur Herstellung einer Verpackungsfolie 1 umfassend eine Grundfolie 2 und wenigstens einen Transponder 3 vorgesehen, wobei die Grundfolie 2 eine Trägerschicht 4 aufweist, wobei in einem Barrierebereich 5 der Grundfolie 2 wenigstens eine Metallschicht 6 zumindest mittelbar auf die Trägerschicht 4 aufgetragen wird, wobei die Grundfolie 2 weiters einen Transponderbereich 7 umfasst, wobei in dem Transponderbereich 7 der wenigstens eine Transponder 3 an der Grundfolie 2 angeordnet wird, wobei die Grundfolie 2 in dem Transponderbereich 7 einen geringeren Schirmdämpfungswert als in dem Barrierebereich 5 aufweist.

Dadurch ergibt sich der Vorteil, dass lokal im Bereich des wenigstens einen Transponders 3 die Abschirmung der wenigstens einen Metallschicht 6 geschwächt werden kann, wodurch der wenigstens eine Transponder 3 mit geringeren Störungen als bei derzeit bekannten Verpackungsfolien ausgelesen werden kann. Dadurch wird ein zum Auslesen von einem Auslesegerät eingestrahltes elektromagnetisches Feld nicht derart an einer Metallschicht 6 reflektiert oder absorbiert, dass ein Auslesen des wenigstens einen Transponders 3 verunmöglicht wird. Dabei kann die Verpackungsfolie 1 schnell und einfach hergestellt sowie der Barrierebereich 5 der Grundfolie 2 in einem Beschichtungsprozess schnell und einfach mit der wenigstens einen Metallschicht 6 beschichtet werden, wodurch eine Verpackungsfolie 1 geschaffen werden kann, welche mit geringeren Störungen als derzeit bekannte Metall umfassende Verpackungsfolien ausgelesenen werden kann und dabei dennoch mit bereits bekannten Verpackungsfolien am Markt bezüglich Herstellungskosten konkurrieren kann. Dadurch kann eine Verpackung 11 aus der Verpackungsfolie 1 geschaffen werden, welche die beispielsweise für Lebensmittel- und Medikamentenverpackungen strengen Vorgaben erfüllt und dabei die Vorteile von Transpondern 3 für die automatische Identifikation- und Datenerfassung ermöglicht.

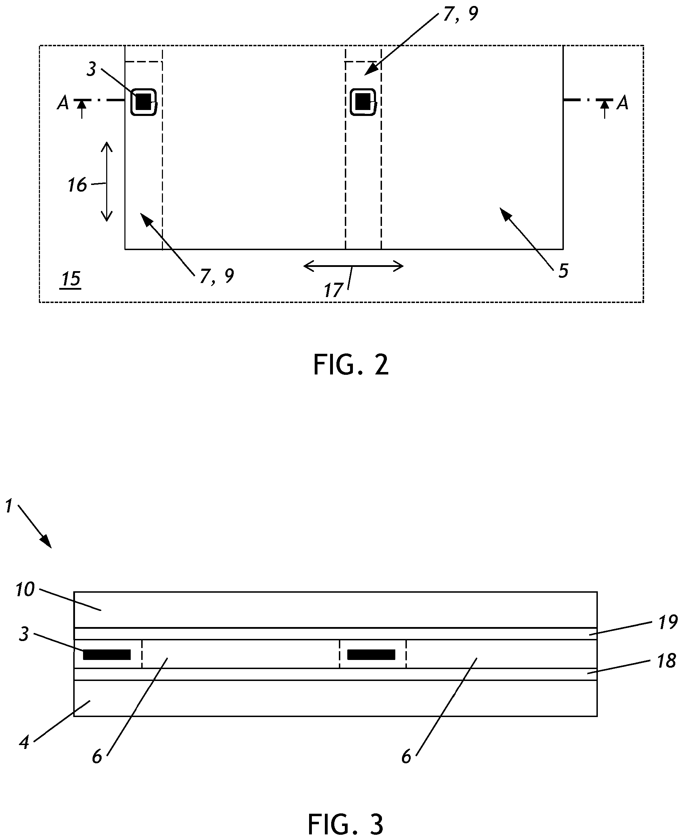

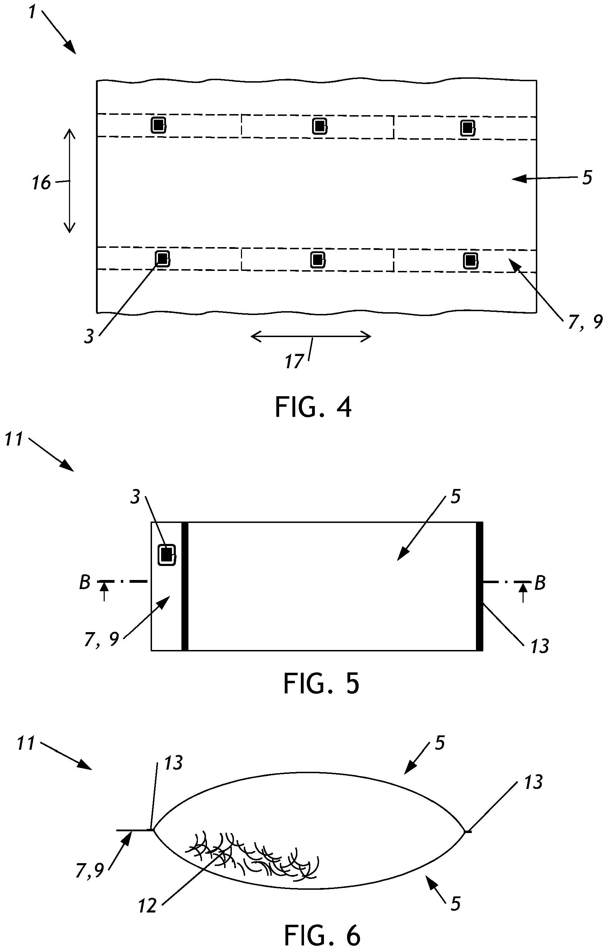

Die Verpackungsfolie 1 ist dafür vorgesehen als Packmittel verwendet zu werden. Dabei kann die Verpackungsfolie 1 ausgebildet sein, um lediglich ein Packgut 12 zu verpacken oder Abschnitte umfassen, um mehrere Packgüter 12 zu verpacken. Dabei ist die Verpackungsfolie 1 dazu ausgebildet eine äußere Schicht einer Verpackung 11 auszubilden. In Fig. 5 ist eine Skizze einer bevorzugten Ausführungsform einer aus zumindest einem Abschnitt der in Fig. 2 gezeigten Verpackungsfolie 1 ausgebildeten Verpackung 11 in Draufsicht gezeigt. Fig. 5 zeigt dabei bevorzugt eine Kartoffelchipspackung in Draufsicht. Bei dieser bevorzugten Ausführungsform der Verpackung 11 wird die Verpackungsfolie 1 bei einem Verpacken eines Inhalts derart gebogen und mit Hilfe von Siegelnähten 13 verschweißt, dass der Inhalt vollständig von dem Barrierebereich 5 umgeben ist. Von dem Barriereberich 5 steht dabei ein Teiltransponderbereich 9 mit wenigstens einen Transponder 3 ab. In Fig. 6 ist der in Fig. 5 gezeigte Schnitt nach BB gezeigt. Dabei ist ersichtlich, dass das Packgut 12, in Fig. 6 beispielsweise als Kartoffelchips gezeigt, innerhalb der Verpackung 11 angeordnet und vollständig von dem Barrierebereich 5 umgeben ist. Der Transponderbereich 7 ist dabei an einem Rand der Verpackung 11 angeordnet und grenzt an den Barrierebereich 5 der Verpackung 11 an.

Die Fig. 1 bis 6 zeigen Skizzen von bevorzugten Ausführungsformen der Verpackungsfolie 1 und der Verpackung 11, wobei den Figuren keine Abmessungen für die Verpackungsfolie 1 und der Verpackung 11 entnommen werden können. Weiters ist die Anwendung der Verpackungsfolie 1 nicht auf die in den Fig. 5 und 6 beispielhaft gezeigte Anwendung als Kartoffelchipspackung beschränkt, sondern die Fig. 5 und 6 sollen lediglich den Erfindungsgedanken erläutern.

Bevorzugt umfasst die Verpackungsfolie 1 einen Kunststoff, insbesondere einen Thermoplast.

Bevorzugt umfasst die Grundfolie 2, insbesondere die Trägerschicht 4, einen Kunststoff, besonders bevorzugt einen Thermoplast. Bevorzugt kann die Trägerschicht 4 aus einem Kunststoff, wie insbesondere Polypropylen (PP) oder Polyethylen (PE) oder Polyethylenterephthalat (PET), ausgebildet sein.

Bevorzugt weist die Trägerschicht 4 die gleiche Größe, insbesondere die gleiche Länge und Breite, wie die Grundfolie 2 auf.

Es ist vorgesehen, dass die Grundfolie 2 einen Barrierebereich 5 und einem Transponderbereich 7 umfasst. In Fig. 1 ist eine Skizze einer bevorzugten Ausführungsform der Verpackungsfolie 1 auf einer Verpackungsrolle 14 aufgerollt in axonometrischer Darstellung gezeigt, wobei ein Teil der Verpackungsfolie 1 abgerollt gezeigt ist.

Bevorzugt kann die Verpackungsfolie 1, insbesondere nach einem Herstellungsprozess der Verpackungsfolie 1, auf eine Verpackungsrolle 14 aufgerollt werden. Die Verpackungsrolle 14 weist daher eine Verpackungsfolie 1 auf, welche um einen tragenden Kern der Verpackungsrolle 14 gewickelt ist. Dies ist für die Verwendung der Verpackungsfolie 1 vorteilhaft, da die erforderlichen Teile bzw. Abschnitte je nach Bedarf abgewickelt werden können.

Bevorzugt kann der Herstellungsprozess der Verpackungsfolie 1 das Ausbilden der Grundfolie 2 und das Anordnung der zumindest mittelbar auf der Trägerschicht 4 angeordneten Metallschicht 6 und das Anordnen des wenigstens einen Transponder 3 an der Grundfolie 2 umfassen.

Bevorzugt umfasst die Verpackungsfolie 1, insbesondere auf einer Verpackungsrolle 14 aufgerollt, mehrere Transponder 3.

Bevorzugt umfasst die Verpackungsfolie 1 auf einer Verpackungsrolle 14 aufgerollt mehrere Abschnitte. Insbesondere weist die - auf die Verpackungsrolle 14 aufgewickelte - Verpackungsfolie 1 eine vorgebbare Anzahl, vorzugweise mehr als 10, insbesondere mehr als 100, besonders bevorzugt mehr als 1000, aufeinander folgende Abschnitte auf. Diese Abschnitte weisen jeweils wenigstens einen Teiltransponderbereiche 9 mit wenigstens einem Transponder 3 auf. Die Verpackungsfolie 1 ist insbesondere derart ausgebildet, dass diese durch Schneiden bzw. einen Schneidvorgang unterbrochen bzw. geteilt bzw. getrennt werden kann. Die einzelnen Abschnitte können daher von der restlichen bzw. verbleibenden Verpackungsfolie 1 abgeschnitten werden.

Bevorzugt kann jeder Abschnitt der Verpackungsfolie 1 jeweils eine Verpackung 11 ausbilden. Bevorzugt kann auch ein Abschnitt der Abschnitte eine Verpackung 11 ausbilden. In Fig. 2 ist ein in Fig. 1 gezeigtes Detail 15 vergrößert dargestellt. Fig. 2 zeigt dabei einen Abschnitt der Verpackungsfolie 1 umfassend zwei Abschnitte für eine Verpackung 11. Die in Fig. 5 und 6 gezeigte Verpackung 11 ist dabei beispielhaft aus einem der zwei in Fig. 2 gezeigten Abschnitte hergestellt.

Bevorzugt umfasst jeder Abschnitt der Verpackungsfolie 1 wenigstens einen Transponder 3.

Bevorzugt kann der Barrierebereich 5 auch mehrere Teilbarrierebereiche umfassen, welche Teilbarrierebereiche zusammen den Barrierebereich 5 ausbilden.

Bevorzugt umfasst die Grundfolie 2 in jedem Teilbarrierebereich wenigstens eine zumindest mittelbar auf der Trägerschicht 4 angeordnete Metallschicht 6.

Bevorzugt umfasst die Grundfolie 2 in dem Barrierebereich 5 die wenigstens eine zumindest mittelbar auf der Trägerschicht 4 angeordnete Metallschicht 6. Eine angeordnete Metallschicht 6 kann bevorzugt auch als aufgebrachte oder aufgetragene Metallschicht 6 bezeichnet werden.

Bevorzugt kann die Metallschicht 6 mittels Dünnschichttechnik, insbesondere mittels physikalischer Gasphasenabscheidung, auch bekannt als "physical vapour deposition (PVD)" oder mittels chemischer Gasphasenabscheidung, auch bekannt als "chemical vapour deposition (CVD)", aufgebracht sein. Dabei kann der Transponderbereich 7 bei der Herstellung der Metallschicht 6 bevorzugt abgedeckt sein. Nachdem das Aufbringen einer Metallschicht auf eine Trägerschicht 4 eine bekannte Technik für einen Fachmann ist, wird an dieser Stelle auf eine weiter Ausführung, wie das Aufbringen einer Metallschicht auf eine Kunststofffolie funktioniert verzichtet und auf die einschlägige Literatur diesbezüglich verwiesen.

Unter "zumindest mittelbar angeordnet" ist dabei insbesondere zu verstehen, dass die in dem Barrierebereich 5 auf die Trägerschicht 4 aufgebrachte Metallschicht 6 direkt auf der Trägerschicht 4 angeordnet sein kann oder dass zwischen der Trägerschicht 4 und der Metallschicht 6 noch eine erste Zwischenschicht 18 angeordnet sein kann. In Fig. 3 ist der in Fig. 2 gezeigten Schnitt nach AA gezeigt, wobei beispielhaft eine angeordnete erste Zwischenschicht 18 zwischen der Trägerschicht 4 und der zumindest mittelbar auf der Trägerschicht 4 angeordneten Metallschicht 6 ersichtlich ist.

Bevorzugt kann die erste Zwischenschicht 18 dazu ausgebildet sein ein Anhaften der Metallschicht 6 zu erleichtern.

Bevorzugt kann die erste Zwischenschicht 18 einen Klebstoff umfassen.

Bevorzugt umfasst die wenigstens eine Metallschicht 6 Aluminium und/oder Kupfer und/oder Silber und/oder Gold. Bevorzugt kann die wenigstens eine Metallschicht 6 auch aus einem anderen Metall ausgebildet sein, welches sich auf die Trägerschicht 4 zumindest mittelbar aufbringen lässt.

Bevorzugt kann die wenigstens eine Metallschicht 6 mindestens 2 nm, besonders bevorzugt mindestens 5 nm, insbesondere mindestens 8 nm, dick sein.

Bevorzugt kann die wenigstens eine Metallschicht 6 maximal 100 nm, besonders bevorzugt maximal 80 nm, insbesondere maximal 50 nm, dick sein.

Der wenigstens ist insbesondere eine Transponder 3 ein Gerät, welches Funksignale, wie elektromagnetische Wellen, empfängt und automatisch beantwortet.

Bevorzugt kann der wenigstens eine Transponder 3 ein passiver Transponder sein. Ein passiver Transponder benötigt zur Kommunikation mit einem Auslesegerät und für die Verarbeitung interner Prozesse keine eigene Energieversorgung, sondern bezieht die für den Auslesevorgang des Transponders 3 benötigte Energie aus dem hergestellten elektromagnetischen Feld des Auslesegeräts.

Bevorzugt kann der wenigstens eine Transponder 3 ein aktiver Transponder sein. Ein aktiver Transponder umfasst eine eigene Energieversorgung oder hat einen Anschluss für eine externe Energieversorgung.

Bevorzugt kann der wenigstens eine Transponder 3 ein RFID-System ausnutzen. Dabei umfasst die Verpackungsfolie 1 den wenigstens einen Transponder 3, welcher mittels dem RFID-System ausgelesen wird. Zum Auslesen des wenigstens einen Transponders 3 wird dabei ein Auslesegerät benötigt, welches bei einem Auslesevorgang ein elektromagnetisches Feld erzeugt.

Bevorzugt kann der wenigstens eine Transponder 3 ein RFID-Transponder sein. Ein RFID-Transponder kann auch als RFID-Chip bezeichnet werden.

Bevorzugt umfasst der wenigstens eine Transponder 3 eine Antenne, einen analogen Schaltkreis zum Empfangen von Informationen eines Auslesegeräts und zum Senden von Informationen des wenigstens einen Transponders 3, einen digitalen Schaltkreis, insbesondere einen Mikrocontroller, und einen permanenten Speicher.

Im Falle eines passiven RFID-Transponders kann ein Auslesen des wenigstens einen Transponders 3 mittels eines Auslesegeräts derart ausgeführt werden, dass das Auslesegerät ein elektromagnetisches Feld mit einer bestimmten Frequenz erzeugt, die Antenne des RFID-Transponders dem elektromagnetischen Feld ausgesetzt wird und dadurch der RFID-Transponder mit Energie versorgt wird. Dadurch wird der Mikrocontroller aktiviert, welcher Auslesebefehle des Auslesegeräts decodiert und eine Antwort für das Auslesegerät codiert. Die Antwort an das Auslesegerät kann beispielsweise eine Feldschwächung des vom Auslesegerät eingestrahlten elektromagnetischen Feld sein.

Die zum Auslesen des wenigstens einen Transponders 3 benötigte Frequenz hängt bevorzugt von dem Typ des wenigstens einen Transponders 3 ab und kann sich daher bei unterschiedlichen Typen von Transpondern voneinander unterscheiden. Bevorzugt ist der Schirmdämpfungswert in dem Transponderbereich 7 und dem Barriereberich 5 an den verwendeten Typ des Transponders 3 angepasst, sodass die Grundfolie 2 in dem Transponderbereich 7 einen geringeren Schirmdämpfungswert als in dem Barrierebereich 5 aufweist.

Bevorzugt kann der wenigstens eine Transponder 3 im Niederfrequenzbereich (LF), insbesondere zwischen mindestens 30 kHz und maximal 300 kHz, auslesbar sein.

Bevorzugt kann der wenigstens eine Transponder 3 im Hochfrequenzbereich (HF), insbesondere zwischen mindestens 3 kHz und maximal 30 MHz, auslesbar sein.

Bevorzugt kann der wenigstens eine Transponder 3 im Ultrahochfrequenzbereich (UHF), insbesondere zwischen mindestens 300 MHz und maximal 3 GHz, auslesbar sein.

Als Schirmdämpfung wird die Wirksamkeit einer Abschirmung quantifiziert. Die Schirmdämpfung bestimmt sich dabei an einem Raumpunkt aus dem Verhältnis einer eingestrahlten Leistungsdichte vor einem Einbringen einer Abschirmung zur Leistungsdichte nach dem Einbringen der Abschirmung. Ein ermittelter Schirmdämpfungswert ist dabei dimensionslos.

Bei einer Ermittlung der Schirmdämpfungswerte der Grundfolie 2 wird dabei bevorzugt zuerst eine Referenzmessung ohne Grundfolie 2 durchgeführt und anschließend die Abschirmung mittels des Transponderbereichs 7 und des Barrierebereichs 5 der Grundfolie 2 gemessen. Dabei weist erfindungsgemäß der Barrierebereich 5 eine größere Abschirmung bzw. einen größeren Schirmdämpfungswert auf.

Für die Messung des Schirmdämpfungswerts ist dabei der für das Auslesen des wenigstens einen Transponders 3 benötigte Frequenzbereich zu verwenden, nachdem der Schirmdämpfungswert bei unterschiedlichen Frequenzen variieren kann. Bei der Verwendung eines RFID-Transponders, welcher bei einer Frequenz von 13.56 MHz ausgelesen werden kann, ist dabei für die Messung des Unterschieds zwischen dem Schirmdämpfungswert in dem Transponderbereich 7 und dem Barrierebereich 5 die Frequenz von 13.56 MHz relevant. Daher sollte in diesem Fall für die Frequenz von 13.56 MHz der Schirmdämpfungswert in dem Transponderbereich 7 geringer sein als in dem Barrierebereich 5, sodass der Barrierebereich 5 eine größere Abschirmung aufweist.

Weiters ist für den Schirmdämpfungswert bevorzugt der gemessene Wert der Schirmdämpfung bei der Herstellung der Verpackungsfolie 1 relevant.

Bevorzugt kann der wenigstens eine Transponder 3 auf der Grundfolie 2, insbesondere auf der Trägerschicht 4 oder auf der ersten Zwischenschicht 18, aufgeklebt sein.

Bevorzugt kann der wenigstens eine Transponder 3 auf der Grundfolie 2, insbesondere auf der Trägerschicht 4 oder auf der ersten Zwischenschicht 18, aufgedruckt sein.

Bevorzugt wird zur Herstellung der Verpackungsfolie 1 zuerst die Grundfolie 2 hergestellt, anschließend in dem Barrierebereich 5 die Grundfolie 2 mit der wenigstens einen zumindest mittelbar auf der Trägerschicht 4 angeordneten Metallschicht 6 versehen und danach der wenigstens eine Transponder 3 in dem Transponderbereich 7 an der Grundfolie 2 angeordnet.

Bevorzugt kann in dem Transponderbereich 7 der wenigstens eine Transponder 3 an der Grundfolie 2, insbesondere nicht zerstörungsfrei lösbar, befestigt sein.

Bevorzugt kann vorgesehen sein, dass die Grundfolie 2 lediglich in dem Barrierebereich 5 die wenigstens eine Metallschicht 6 umfasst. Mit anderen Worten kann bevorzugt vorgesehen sein, dass der Transponderbereich 7 metallschichtfrei ausgebildet ist. Dadurch ergibt sich der Vorteil, dass ein Sichtfenster in der Verpackungsfolie 1 ausgebildet werden kann, wobei der wenigstens eine Transponder 3 in dem Transponderbereich 7 bei einer aus der Verpackungsfolie 1 hergestellten Verpackung 11 ersichtlich ist. Weiters kann dadurch ein besonders störungsarmes Auslesens des wenigstens einen Transponders 3 erreicht werden.

Bevorzugt kann vorgesehen sein, dass die Grundfolie 2 in dem Transponderbereich 7 wenigstens eine weitere zumindest mittelbar auf der Trägerschicht 4 angeordnete Metallschicht oder eine auf der Trägerschicht 4 aufgebrachte Struktur aus Metall umfasst. Dabei ergibt sich der Vorteil, dass der wenigstens eine Transponder 3 auf einer durch die Verpackungsfolie 1 ausgebildeten Verpackung 11 durch die wenigstens eine weitere Metallschicht oder durch die aufgebrachte Struktur verdeckt werden kann, sodass ein Käufer einer Verpackung 11 nicht sofort erkennt, dass die gekaufte Verpackung 11 einen Transponder 3 beinhaltet. Mit anderen Worten kann dadurch der wenigstens eine Transponder 3 in der Verpackungsfolie 1 versteckt werden.

Die weitere zumindest mittelbar auf der Trägerschicht 4 angeordnete Metallschicht oder die auf der Trägerschicht 4 aufgebrachte Struktur aus Metall ist dabei derart aufzubringen bzw. anzuordnen, dass die Grundfolie 2 in dem Transponderbereich 7 einen geringeren Schirmdämpfungswert als in dem Barrierebereich 5 aufweist. In den Fig. 1 bis 6 ist die zumindest mittelbar auf die Trägerschicht 4 angeordnete weitere Metallschicht oder die auf der Trägerschicht 4 aufgebrachte Struktur aus Metall nicht ersichtlich.

Bevorzugt kann vorgesehen sein, dass die Dicke der in dem Transponderbereich 7 angeordneten weiteren Metallschicht geringer als die in dem Barrierebereich 5 angeordnete Metallschicht 6 ist. Dadurch kann auch in dem Transponderbereich 7 eine Barrierewirkung erreicht werden, wobei Störungen bei einem Auslesen des wenigstens eines Transponders 3 gegenüber derzeit bekannten metallisierten Verpackungsfolien dennoch reduziert werden können.

Bevorzugt kann vorgesehen sein, dass der Schirmdämpfungswert in dem Transponderbereich 7 um mindestens 50%, besonders bevorzugt mindestens 70%, insbesondere mindestens 90%, geringer als in dem Barrierebereich 5 ist. Dadurch ergibt sich der Vorteil, dass der wenigstens eine Transponders 3 mit geringeren Störungen bei bisher bekannten metallisierten Verpackungsfolien ausgelesen werden kann.

Bevorzugt kann vorgesehen sein, dass der Barrierebereich 5 unmittelbar an den Transponderbereich 7 anschließt. Dadurch kann die Verpackungsfolie 1 besonders einfach aufgebaut werden, wobei eine Verpackungsmaschine die Verpackungsfolie 1 einfach verarbeiten kann, weil der Barrierebereich 5 und der Transponderbereich 7 an der Verpackungsfolie 1 klar voneinander abgegrenzt sind.

Bevorzugt kann vorgesehen sein, dass die Grundfolie 2 lediglich den Barrierebereich 5 und den Transponderbereich 7 umfasst. Dadurch ergibt sich der Vorteil, dass die Verpackungsfolie 1 mittels lediglich zwei Bereichen ausgebildet werden kann, wobei sich die Verpackungsfolie 1 besonders einfach herstellen lässt und auch von einer Verpackungsmaschine besonders einfach verarbeitet werden kann.

Bevorzugt kann vorgesehen sein, dass der Transponderbereich 7 der Grundfolie 2 streifenförmig ausgebildet ist. Dadurch ergibt sich der Vorteil, dass die Metallschicht 6 in dem Barrierebereich 5 besonders einfach und schnell aufgebracht werden kann. Dadurch kann auch das Verarbeiten der Verpackungsfolie 1 durch eine Verpackungsmaschine erleichtert werden, da der Transponderbereich 7 und der Barrierebereich 5 der Grundfolie 2 genau vorgegeben sind.

Beispielsweise kann bei einem Verpacken eines Packguts 12, ein Abschnitt der Verpackungsfolie 1 derart gebogen und verschweißt werden, dass ein Schlauch durch die Verpackungsfolie 1 ausgebildet wird. Anschließend kann der Schlauch an einem offenen Ende des Schlauchs zu einem Sack verschweißt werden, wobei der Transponderbereich 7 von der durch das Verschweißen ausgebildeten Siegelnaht 13 des verschlossenen Ende des Sacks absteht. Daran anschließend kann eine Füllung, also das Packgut 12, in den derart ausgebildeten Sack eingebracht werden und das noch offene Ende des Sacks verschweißt werden. Eine derart herstellbare Verpackung 11 ist beispielhaft in Fig. 5 ersichtlich, wobei lediglich zwei Siegelnähte ersichtlich sind. Die erste oben beschriebene Siegelnaht 13 zur Ausbildung des Schlauchs ist in Fig. 5 nicht ersichtlich.

Bevorzugt kann vorgesehen sein, dass der Transponderbereich 7 zumindest teilweise an einem Rand der Grundfolie 2 angeordnet ist. Dadurch ergibt sich der Vorteil, dass der Transponderbereich 7 besonders einfach und schnell hergestellt werden kann, da bei einem Aufbringen der Metallschicht 6 lediglich der Rand der Grundfolie 2 ausgespart werden muss. Beispielsweise kann dabei bei einem Beschichtungsprozess der Rand der Grundfolie 2 abgedeckt sein.

Bevorzugt kann der Transponderbereich 7 in einem auf einer Verpackungsrolle 14 aufgerollten Zustand zumindest teilweise an dem Rand der Grundfolie 2 angeordnet sein.

Vorgesehen ist, dass der Transponderbereich 7 der Grundfolie 2 beabstandet und parallel zueinander angeordnete Teiltransponderbereiche 9 umfasst, wobei in jedem Teiltransponderbereich 9 wenigstens ein Transponder 3 an der Grundfolie 2 angeordnet ist. Dadurch ergibt sich der Vorteil, dass Abschnitte der Verpackungsfolie 1 geschaffen werden können und wobei mittels der Abschnitte besonders einfach mehreren Packgütern 12 verpackt werden können, da lediglich ein Teilstück der Verpackungsfolie 1 oder eines Abschnitts der Verpackungsfolie 1 abgeschnitten und das Packgut 12 in das Teilstück oder den Abschnitt angeordnet und verschweißt werden muss.

Bevorzugt umfasst der Transponderbereich 7 wenigstens zwei Teiltransponderbereiche 9.

Bevorzugt umfasst der Transponderbereich 7 mehrerer Teiltransponderbereiche 9.

In Fig. 1 sind beispielhaft mehrere Teiltransponderbereiche 9 an der Verpackungsfolie 1 gezeigt.

Bevorzugt können wenigstens zwei Teiltransponderbereiche 9 der Grundfolie 2 aneinander angrenzen.

Bevorzugt können aneinander angrenzende Teiltransponderbereiche 9 zumindest einen Streifen des streifenförmig ausgebildeten Transponderbereichs 7 ausbilden.

Bevorzugt können wenigstens zwei Teiltransponderbereiche 9 der Grundfolie 2 beabstandet zueinander angeordnet sein.

Bevorzugt kann der Transponderbereich 7 zumindest zwei Streifen aneinander angrenzende Teiltransponderbereiche 9 umfassen. Bevorzugt können die zwei Streifen beabstandet und parallel zueinander angeordnet sein. Dies ist beispielhaft in Fig. 1 gezeigt.

Bevorzugt kann der Transponderbereich 7 mehrerer Streifen von aneinander angrenzende Teiltransponderbereiche 9 umfassen.

Bevorzugt umfasst die Verpackungsfolie 1 eine Längserstreckung 16 und eine Quererstreckung 17. Bevorzugt ist die Längserstreckung 16 der Verpackungsfolie 1 länger als die Querstreckung 17 der Verpackungsfolie 1. In den Fig. 1, 2 und 4 ist die Längserstreckung 16 und die Quererstreckung 17 der Verpackungsfolie 1 beispielhaft gezeigt. Bevorzugt wird die Verpackungsfolie 1 in Richtung der Längserstreckung 16 auf die Verpackungsrolle 14 aufgerollt oder abgerollt.

Bevorzugt ist eine Längserstreckung der Teiltransponderbereiche 9 im Wesentlichen parallel zur Längserstreckung 16 und/oder der Quererstreckung 17 der Verpackungsfolie 1 ausgebildet. In den Fig. 1 und 2 ist beispielhaft eine Längserstreckung der Teiltransponderbereiche 9 parallel zur Längserstreckung 16 der Verpackungsfolie 1 gezeigt. In Fig. 4 ist beispielhaft eine Längserstreckung der Teiltransponderbereiche 9 parallel zur Quererstreckung 17 der Verpackungsfolie 1 gezeigt.

Bevorzugt umfasst jeder Abschnitt der Verpackungsfolie 1 wenigstens einen Teiltransponderbereich 9.

Ein Abschnitt der Verpackungsfolie 1 umfasst bevorzugt einen Teil der Grundfolie 2, einen Teil des Barrierebereichs 5 und einen Teiltransponderbereich 9.

Bevorzugt kann vorgesehen sein, dass, insbesondere in einem auf einer Verpackungsrolle 14 aufgerollten Zustand der Verpackungsfolie 1, mehrere Teiltransponderbereiche 9 an dem Rand der Verpackungsfolie 1 angeordnet sind. Dies ist beispielhaft in Fig. 1 ersichtlich.

Bevorzugt kann vorgesehen sein, dass die Grundfolie 2 weiters eine Deckschicht 10 aufweist und dass die wenigstens eine zumindest mittelbar auf der Trägerschicht 4 angeordnete Metallschicht 6 in dem Barrierebereich 5 und/oder der wenigstens eine Transponder 3 in dem Transponderbereich 7 zwischen der Trägerschicht 4 und der Deckschicht 10 angeordnet ist. Dadurch ergibt sich der Vorteil, dass die Metallschicht 6 und der wenigstens eine Transponder 3 vor einer Beschädigung geschützt werden kann.

Bevorzugt kann vorgesehen sein, dass die Deckschicht 10 gleichartig wie die Trägerschicht 4 ausgebildet ist.

Bevorzugt kann die Deckschicht 10 aus Kunststoff, insbesondere aus einem Thermoplast, ausgebildet sein.

Bevorzugt kann die Deckschicht 10 aus Polypropylen (PP) oder Polyethylen (PE) oder Polyethylenterephthalat (PET), ausgebildet sein.

Bevorzugt kann zwischen der zumindest mittelbar auf der Trägerschicht 4 angeordneten Metallschicht 6 und der Deckschicht 10 eine zweite Zwischenschicht 19 angeordnet sein. In Fig. 3 ist beispielhaft die zweite Zwischenschicht 19 zwischen der zumindest mittelbar auf der Trägerschicht 4 angeordneten Metallschicht 6 und der Deckschicht 10 ersichtlich.

Bevorzugt kann die zweite Zwischenschicht 19 gleichartig wie die erste Zwischenschicht 18 ausgebildet sein. Bevorzugt kann die zweite Zwischenschicht 19 das Anhaften der Deckschicht 10 verbessern.

Bevorzugt kann mittels der Verpackungsfolie 1 eine Verpackung 11 ausgebildet werden, wobei die Verpackung 11 eine Hülle für ein Packgut 12 ausbildet. Eine Hülle ist dabei bevorzugt etwas, worin etwas verpackt und aufbewahrt werden kann.

Der Barrierebereich 5 ist insbesondere dafür vorgesehen eine Schutzbarriere auszubilden, damit das in der Verpackung 11 befindliche Packgut 12 vor äußeren Einflüssen geschützt wird.

Bevorzugt wird zum Verpacken einer Ware, also eines Packguts 12, aus der Verpackungsfolie 1 eine Verpackung 11 ausgebildet. Dazu kann die Verpackungsfolie 1 bevorzugt mit sich selbst oder mit einer weiteren Verpackungsfolie 1 oder einem Abschnitt einer weiteren Verpackungsfolie 1 verschweißt werden, um eine Hülle für die zu verpackende Ware auszubilden. Nach dem Verschweißen der Verpackungsfolie 1 befindet sich die verpackte Ware bzw. das verpackte Packgut 12 innerhalb der Verpackung 11 und ist bevorzugt vollständig von dem Barrierebereich 5 der Grundfolie 2 umgeben. Von der mit der Verpackungsfolie 1 ausgebildeten Hülle bzw. dem Barrierebereich 5 steht dabei bevorzugt der Transponderbereich 7 der Grundfolie 2 ab. Der Transponderbereich 7 ist bevorzugt an einem Rand der Verpackung 11 angeordnet. Dies ist beispielhaft in den Fig. 5 und 6 gezeigt. Der Transponderbereich 7 ist dabei Teil der Verpackung 11 jedoch bevorzugt nicht Teil der ausgebildeten Hülle. Bevorzugt grenzt der Transponderbereich 7 an die ausgebildete Hülle an. Dadurch sind die Barriereeigenschaften der ausgebildeten Hülle insbesondere durch den Barrierebereich 5 der Grundfolie 2 vorgegeben und sind nicht durch den Transponderbereich 7 der Grundfolie 2 geschwächt.

Bevorzugt ist die Verpackungsfolie 1 einstückig ausgebildet. Bevorzugt ist die Verpackung 11 lediglich aus der Verpackungsfolie 1 ausgebildet.

Bevorzugt kann vorgesehen sein, dass die Verpackung 11 wenigstens eine Siegelnaht 13 umfasst und dass der Transponderbereich 7 an die wenigstens eine Siegelnaht 13 angrenzt. Dadurch kann der Inhalt der Verpackung 11 effektiv vor äußeren Einflüssen geschützt werden, wobei ein Auslesen des wenigstens einen Transponders 3 an einem überstehenden Rand der Verpackung 11 bei einer Siegelnaht 13 erreicht werden kann.

Eine Siegelnaht 13 ist dabei eine Verbindungsnaht zwischen zwei Folien bzw. eine Verschweißung zweier Folien. Bevorzugt kann die Verpackungsfolie 1 mit sich selbst verschweißt sein, wodurch eine Siegelnaht 13 an der Verpackungsfolie 1 ausgebildet ist. Bevorzugt wird eine Siegelnaht 13 mittels eines Siegelgeräts aufgebracht, wobei mittels Aufbringen von Wärme, Zeit und Druck die Siegelnaht 13 erzeugt wird.

Bevorzugt kann vorgesehen sein, dass der wenigstens eine Transponder 3 bei der Herstellung der Verpackungsfolie 1 an der Grundfolie 2 angeordnet wird. Dadurch ergibt sich der Vorteil, dass der wenigstens eine Transponder 3 gleich direkt bei der Auslieferung der Verpackungsfolie 1 in dieser enthalten ist und dadurch bei der Auslieferung der Verpackungsfolie 1 Herstellerangaben auf den wenigstens einen Transponder 3 abgespeichert werden können.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Das Bindewort "oder" ist als inklusiv und nicht als exklusiv zu interpretieren. Sofern es sich aus dem Kontext nicht anders ergibt, umfasst "A oder B" auch "A und B", wobei "A" und "B" beliebige Merkmale darstellen.

Mittels eines ordnenden Zahlwortes, beispielweise "erster", "zweiter" oder "dritter", werden insbesondere ein Merkmal X bzw. ein Gegenstand Y in mehreren Ausführungsformen unterschieden, sofern dies nicht durch die Offenbarung der Erfindung anderweitig definiert wird. Insbesondere bedeutet ein Merkmal X bzw. Gegenstand Y mit einem ordnenden Zahlwort in einem Anspruch nicht, dass eine unter diesen Anspruch fallende Ausgestaltung der Erfindung ein weiteres Merkmal X bzw. einen weiteren Gegenstand Y aufweisen muss.

Bei Wertebereichen sind die Endpunkte mitumfasst, sofern es sich aus dem Kontext nicht anders ergibt.

## Patentansprüche

1. Verpackungsfolie (1) umfassend eine Grundfolie (2) und wenigstens einen Transponder (3), wobei die Grundfolie (2) eine Trägerschicht (4) aufweist, wobei die Grundfolie (2) in einem Barrierebereich (5) weiters wenigstens eine zumindest mittelbar auf der Trägerschicht (4) angeordnete Metallschicht (6) umfasst, wobei die Grundfolie (2) weiters einen Transponderbereich (7) umfasst, dass in dem Transponderbereich (7) der wenigstens eine Transponder (3) an der Grundfolie (2) angeordnet ist, und dass die Grundfolie (2) in dem Transponderbereich (7) einen geringeren Schirmdämpfungswert als in dem Barrierebereich (5) aufweist, **dadurch gekennzeichnet, dass** der Transponderbereich (7) der Grundfolie (2) eine vorgebbare Mehrzahl beabstandeter und parallel zueinander angeordneter Teiltransponderbereiche (9) umfasst, wobei in jedem Teiltransponderbereich (9) wenigstens ein Transponder (3) an der Grundfolie (2) angeordnet ist.

2. Verpackungsfolie (1) nach Anspruch 1, **dadurch gekennzeichnet, dass** die Grundfolie (2) lediglich in dem Barrierebereich (5) die wenigstens eine Metallschicht (6) umfasst.

3. Verpackungsfolie (1) nach Anspruch 1, **dadurch gekennzeichnet, dass** die Grundfolie (2) in dem Transponderbereich (7) wenigstens eine weitere zumindest mittelbar auf der Trägerschicht (4) angeordnete Metallschicht oder eine auf der Trägerschicht (4) aufgebrachte Struktur aus Metall umfasst.

4. Verpackungsfolie (1) nach Anspruch 3, **dadurch gekennzeichnet, dass** die Dicke der in dem Transponderbereich (7) angeordneten weiteren Metallschicht geringer als die in dem Barrierebereich (5) angeordnete Metallschicht (6) ist.

5. Verpackungsfolie (1) nach einem der Ansprüche 1 bis 4, **dadurch gekennzeichnet, dass** der Schirmdämpfungswert in dem Transponderbereich (7) um mindestens 50%, besonders bevorzugt mindestens 70%, insbesondere mindestens 90%, geringer als in dem Barrierebereich (5) ist.

6. Verpackungsfolie (1) nach einem der Ansprüche 1 bis 5, **dadurch gekennzeichnet, dass** der Barrierebereich (5) unmittelbar an den Transponderbereich (7) anschließt.

7. Verpackungsfolie (1) nach einem der Ansprüche 1 bis 6, **dadurch gekennzeichnet, dass** der Transponderbereich (7) der Grundfolie (2) streifenförmig ausgebildet ist.

8. Verpackungsfolie (1) nach einem der Ansprüche 1 bis 7, **dadurch gekennzeichnet, dass** der Transponderbereich (7) zumindest teilweise an einem Rand der Grundfolie (2) angeordnet ist.

9. Verpackungsfolie (1) nach einem der Ansprüche 1 bis 8, **dadurch gekennzeichnet, dass** die Grundfolie (2) weiters eine Deckschicht (10) aufweist und dass die wenigstens eine zumindest mittelbar auf der Trägerschicht (4) angeordnete Metallschicht (6) in dem Barrierebereich (5) und/oder der wenigstens eine Transponder (3) in dem Transponderbereich (7) zwischen der Trägerschicht (4) und der Deckschicht (10) angeordnet ist.

10. Verpackung (11) aus zumindest einem Abschnitt einer Verpackungsfolie (1) nach einem der Ansprüche 1 bis 9, wobei die Verpackung (11) mittels der Verpackungsfolie (1) eine Hülle für ein Packgut (12) ausbildet, **dadurch gekennzeichnet, dass** der Transponderbereich (7) der Grundfolie (2) von der ausgebildeten Hülle für das Packgut (12) abstehend angeordnet ist.

11. Verpackung (11) nach Anspruch 10, **dadurch gekennzeichnet, dass** die Verpackung (11) wenigstens eine Siegelnaht (13) umfasst und dass der Transponderbereich (7) an die wenigstens eine Siegelnaht (13) angrenzt.

12. Verpackungsrolle (14) auf welche eine Verpackungsfolie (1) nach einem der Ansprüche 1 bis 9 aufgerollt ist.

13. Verpackungsrolle (14) nach Anspruch 12, **dadurch gekennzeichnet, dass** die aufgerollte Verpackungsfolie (1) eine vorgebbare Anzahl aufeinander folgender, vorzugsweise durch Schneiden voneinander trennbare, Abschnitte aufweist, und dass jeder Abschnitt wenigstens einen Teiltransponderbereiche (9) mit wenigstens einem Transponder (3) umfasst.

14. Verfahren zur Herstellung einer Verpackungsfolie (1) umfassend eine Grundfolie (2) und wenigstens einen Transponder (3), wobei die Grundfolie (2) eine Trägerschicht (4) aufweist, wobei in einem Barrierebereich (5) der Grundfolie (2) wenigstens eine Metallschicht (6) zumindest mittelbar auf die Trägerschicht (4) aufgetragen wird, wobei die Grundfolie (2) weiters einen Transponderbereich (7) umfasst, wobei in dem Transponderbereich (7) der wenigstens eine Transponder (3) an der Grundfolie (2) angeordnet wird, wobei die Grundfolie (2) in dem Transponderbereich (7) einen geringeren Schirmdämpfungswert als in dem Barrierebereich (5) aufweist, **dadurch gekennzeichnet, dass** der Transponderbereich (7) der Grundfolie (2) eine vorgebbare Mehrzahl beabstandeter und parallel zueinander angeordneter Teiltransponderbereiche (9) umfasst, wobei in jedem Teiltransponderbereich (9) wenigstens ein Transponder (3) an der Grundfolie (2) angeordnet ist.

## Claims

1. A packaging film (1) comprising a base film (2) and at least one transponder (3), wherein the base film (2) comprises a carrier layer (4) and further comprises, in a barrier region (5), at least one metal layer (6) arranged at least indirectly on the carrier layer (4), wherein the base film (2) further comprises a transponder region (7), in that, in the transponder region (7), at least one transponder (3) is arranged on the base film (2), and in that, in the transponder region (7), the base film (2) comprises a lower shielding attenuation value than in the barrier region (5), **characterized in that** the transponder region (7) of the base film (2) comprises a predeterminable plurality of partial transponder regions (9) being spaced apart and arranged parallel to each other, wherein at least one transponder (3) is arranged on the base film (2) in each partial transponder region (9).

2. The packaging film (1) according to Claim 1, **characterized in that** the base film (2) comprises the at least one metal layer (6) only in the barrier region (5).

3. The packaging film (1) according to Claim 1, **characterized in that** the base film (2) comprises, in the transponder region (7), at least one further metal layer arranged at least indirectly on the carrier layer (4), or a metallic structure applied to the carrier layer (4).

4. The packaging film (1) according to Claim 3, **characterized in that** the thickness of the further metal layer arranged in the transponder region (7) is less than that of the metal layer (6) arranged in the barrier region (5).

5. The packaging film (1) according to any of the Claims 1 to 4, **characterized in that** the shielding attenuation value in the transponder region (7) is at least 50%, preferably at least 70%, in particular at least 90%, lower than in the barrier region (5).

6. The packaging film (1) according to any of the Claims 1 to 5, **characterized in that** the barrier region (5) directly adjoins the transponder region (7).

7. The packaging film (1) according to any of the Claims 1 to 6, **characterized in that** the transponder region (7) of the base film (2) is configured in the form of a strip.

8. The packaging film (1) according to any of the Claims 1 to 7, **characterized in that** the transponder region (7) is arranged at least partially on one edge of the base film (2).

9. The packaging film (1) according to any of the Claims 1 to 8, **characterized in that** the base film (2) further comprises a cover layer (10) and **in that** the at least one metal layer (6) arranged at least indirectly on the carrier layer (4) is arranged in the barrier region (5) and/or the at least one transponder (3) is arranged in the transponder region (7) between the carrier layer (4) and the cover layer (10).

10. A packaging (11) comprising at least one section of a packaging film (1) according to any of the Claims 1 to 9, wherein the packaging (11) forms a casing for a packaged good (12) by means of the packaging film (1), **characterized in that** the transponder region (7) of the base film (2) is arranged so as to protrude from the casing formed for the packaged good (12).

11. The packaging (11) according to Claim 10, **characterized in that** the packaging (11) comprises at least one sealing seam (13), and **in that** the transponder region (7) adjoins the at least one sealing seam (13).

12. A packaging roll (14) onto which a packaging film (1) as claimed in any of the Claims 1 to 9 is rolled.

13. The packaging roll (14) according to Claim 12, **characterized in that** the rolled-up packaging film (1) comprises a predeterminable number of successive sections, which can preferably be separated from one another by cutting, and **in that** each section comprises at least one partial transponder region (9) having at least one transponder (3).

14. A method for producing a packaging film (1) comprising a base film (2) and at least one transponder (3), wherein the base film (2) comprises a carrier layer (4), wherein at least one metal layer (6) is applied at least indirectly to the carrier layer (4) in a barrier region (5) of the base film (2), wherein the base film (2) further comprises a transponder region (7), wherein the at least one transponder (3) is arranged on the base film (2) in the transponder region (7), wherein the base film (2) comprises a lower shielding attenuation value in the transponder region (7) than in the barrier region (5), **characterized in that** the transponder region (7) of the base film (2) comprises a predeterminable plurality of partial transponder regions (9) being spaced apart and arranged parallel to each other, wherein at least one transponder (3) is arranged on the base film (2) in each partial transponder region (9).

## Revendications

1. Film d'emballage (1) comprenant un film de base (2) et au moins un transpondeur (3), le film de base (2) présentant une couche de support (4), le film de base (2) comprenant en outre au moins une couche métallique (6) disposée au moins indirectement sur la couche de support (4) dans une zone de barrière (5), le film de base (2) comprenant en outre une zone de transpondeur (7), le au moins un transpondeur (3) étant disposé sur le film de base (2) dans la zone de transpondeur (7), et le film de base (2) présentant une valeur d'atténuation de blindage plus faible dans la zone de transpondeur (7) que dans la zone de barrière (5), **caractérisé en ce que** la zone de transpondeur (7) du film de base (2) comprend une pluralité prédéfinissable de zones de transpondeur partielles (9) espacées et disposées parallèlement les unes aux autres, au moins un transpondeur (3) étant disposé sur le film de base (2) dans chaque zone de transpondeur partielle (9).

2. Film d'emballage (1) selon la revendication 1, **caractérisé en ce que** le film de base (2) ne comprend au moins une couche métallique (6) que dans la zone de barrière (5).

3. Film d'emballage (1) selon la revendication 1, **caractérisé en ce que** le film de base (2) dans la zone de transpondeur (7) comprend au moins une autre couche métallique disposée au moins indirectement sur la couche de support (4) ou une structure métallique appliquée sur la couche de support (4).

4. Film d'emballage (1) selon la revendication 3, **caractérisé en ce que** l'épaisseur de la couche métallique supplémentaire disposée dans la zone de transpondeur (7) est inférieure à la couche métallique (6) disposée dans la zone de barrière (5).

5. Film d'emballage (1) selon l'une des revendications 1 à 4, **caractérisé en ce que** la valeur d'amortissement du blindage dans la zone du transpondeur (7) est inférieure d'au moins 50 %, de manière particulièrement préférée d'au moins 70 %, en particulier d'au moins 90 %, à celle de la zone de barrière (5).

6. Film d'emballage (1) selon l'une des revendications 1 à 5, **caractérisé en ce que** la zone de barrière (5) se raccorde directement à la zone de transpondeur (7).

7. Film d'emballage (1) selon l'une quelconque des revendications 1 à 6, **caractérisé en ce que** la zone de transpondeur (7) du film de base (2) est en forme de bande.

8. Film d'emballage (1) selon l'une quelconque des revendications 1 à 7, **caractérisé en ce que** la zone de transpondeur (7) est disposée au moins partiellement sur un bord du film de base (2).

9. Film d'emballage (1) selon l'une quelconque des revendications 1 à 8, **caractérisé en ce que** le film de base (2) présente en outre une couche de recouvrement (10) et **en ce que** la au moins une couche métallique (6) disposée au moins indirectement sur la couche de support (4) est disposée dans la zone de barrière (5) et/ou le au moins un transpondeur (3) est disposé dans la zone de transpondeur (7) entre la couche de support (4) et la couche de recouvrement (10).

10. Emballage (11) d'au moins une section d'un film d'emballage (1) selon l'une des revendications 1 à 9, l'emballage (11) formant une enveloppe pour un produit d'emballage (12) au moyen du film d'emballage (1), **caractérisé en ce que** la zone de transpondeur (7) du film de base (2) est disposée en saillie par rapport à l'enveloppe formée pour le produit d'emballage (12).

11. Emballage (11) selon la revendication 10, **caractérisé en ce que** l'emballage (11) comprend au moins une couture de scellage (13) et **en ce que** la zone de transpondeur (7) est adjacente à la au moins une couture de scellage (13).

12. Rouleau d'emballage (14) sur lequel un film d'emballage (1) selon l'une quelconque des revendications 1 à 9 est enroulé.

13. Rouleau d'emballage (14) selon la revendication 12, **caractérisé en ce que** le film d'emballage enroulé (1) présente un nombre prédéfinissable de sections successives, de préférence séparables les unes des autres par découpe, et **en ce que** chaque section comprend au moins une zone de transpondeur partiel (9) avec au moins un transpondeur (3).

14. Procédé de fabrication d'un film d'emballage (1) comprenant un film de base (2) et au moins un transpondeur (3), le film de base (2) présentant une couche de support (4), au moins une couche métallique (6) étant appliquée au moins indirectement sur la couche de support (4) dans une zone de barrière (5) du film de base (2), le film de base (2) comprenant en outre une zone de transpondeur (7), au moins un transpondeur (3) étant disposé sur le film de base (2) dans la zone de transpondeur (7), le film de base (2) présentant une valeur d'atténuation de blindage plus faible dans la zone de transpondeur (7) que dans la zone de barrière (5), **caractérisé en ce que** la zone de transpondeur (7) du film de base (2) comprend une pluralité prédéfinissable de zones de transpondeur partielles (9) espacées et disposées parallèlement les unes aux autres, au moins un transpondeur (3) étant disposé sur le film de base (2) dans chaque zone de transpondeur partielle (9).
